# EUROPÄISCHE PATENTSCHRIFT

(11) **EP 3 888 254 B1**
(45) Veröffentlichungstag und Bekanntmachung des Hinweises auf die Patenterteilung: **20.08.2025**
(21) Anmeldenummer: 19805133.6
(22) Anmeldetag: 23.10.2019
(51) Int. Cl.: H04B 3/46, H04L 1/20, H04L 25/06

(54) **VERFAHREN ZUR DATENÜBERTRAGUNG ÜBER EINEN INSBESONDERE LEITUNGSGEBUNDENEN DATENÜBERTRAGUNGSKANAL UND ANTRIEBSSYSTEM**
METHOD FOR TRANSFERRING DATA VIA A DATA TRANSFER CHANNEL, IN PARTICULAR A WIRED DATA TRANSFER CHANNEL, AND DRIVE SYSTEM
PROCÉDÉ DE TRANSMISSION DE DONNÉES AU MOYEN D'UN CANAL DE TRANSMISSION DE DONNÉES NOTAMMENT FILAIRE ET SYSTÈME D'ENTRAÎNEMENT

(30) Priorität: 28.11.2018 DE 102018009326
(43) Veröffentlichungstag der Anmeldung: 06.10.2021
(73) Patentinhaber: SEW-EURODRIVE GmbH & Co. KG, 76646 Bruchsal (DE)
(72) Erfinder: SCHAAF, Christian, 76661 Philippsburg (DE); HOFFMANN, Philipp, 76863 Herxheim (DE); SCHÄFER, Harald, 76139 Karlsruhe (DE)
(86) Internationale Anmeldenummer: PCT/EP2019/025359
(87) Internationale Veröffentlichungsnummer: WO 2020/108792

(56) Entgegenhaltungen:
- EP-A2- 0 328 266
- DE-A1- 102013 007 649
- US-A- 5 995 512

## Beschreibung

Die Erfindung betrifft ein Verfahren zur Datenübertragung über einen leitungsgebundenen Datenübertragungskanal und ein Antriebssystem.

Es ist allgemein bekannt, dass Daten über einen Datenübertragungskanal übertragbar sind.

**Aus der** DE 42 21 476 A1 **ist eine Anordnung zur Regeneration eines Binärsignals bekannt.**

**Aus der** DE 10 2010 034 521 A1 **ist ein Verfahren zum Empfang durch einen Empfänger eines Knotens in einem Funknetz bekannt.**

**Aus der** EP 0 328 266 A2 **ist als nächstliegender Stand der Technik ein Verfahren zur Datenübertragung bekannt.**

**Aus der** US 5 995 512 A **ist ein Hochgeschwindigkeits-Multimedia-Netzwerk bekannt.**

**Aus der** DE 10 2013 007649 A1 **ist ein Verfahren zum Betreiben eines Systems bekannt.**

Der Erfindung liegt daher die Aufgabe zugrunde, die Sicherheit bei Antriebssystemen zu erhöhen.

Erfindungsgemäß wird die Aufgabe bei dem Verfahren nach den in Anspruch 1 und bei dem Antriebssystem nach Anspruch 7 angegebenen Merkmalen gelöst.

Von Vorteil ist dabei, dass in einfacher Weise erkennbar ist, ob die Symbole sicher übertragen wurden. Falls eine Störung aufgetreten ist, wird ein Fehlerzustand angezeigt. Kern der Erfindung ist, dass ein empfangender aber digitaler Datenstrom digital überabgetastet wird und daraus ein Bewertungssignal erzeugt wird, mit welchem eine unzulässig starke Störung erkennbar ist. Aus der Überabtastung wird also ein analoger Wert bestimmt, der die Stärke der Störung repräsentiert. Wenn dieser analoge Wert unzulässige Werte annimmt, also in einem Band zwischen dem unteren und oberen Schwellwert ist, wird daraus geschlossen, dass das Symbol nicht sicher übertragen wurde. Wenn gehäuft Symbole nicht sicher übertragen wurden, insbesondere, wenn also aufeinander zeitlich direkt folgende Symbole alle jeweils nicht sicher übertragen wurden, wird ein Fehlerzustand angezeigt und somit der Datenübertragungskanal als unzulässig schlecht bewertet.

Die Erfindung ermöglicht also eine Bewertung der Störungen bei der Datenübertragung durch den Datenübertragungskanal.

Die Erfindung ist somit anwendbar bei Umschaltung von einem anderen auf den obengenannten Datenübertragungskanal nach dessen Erkennung.

Alternativ ist die Erfindung anwendbar als automatisierte Meldung "Kabelbruch" im Feld, also in einer industriellen Anlage. Dabei wird die Meldung an eine Leitstelle geleitet und dort die Unterscheidung "externe Störung" von "Leitung defekt" möglich.

Weiter alternativ ist die Erfindung anwendbar bei automatischer Ermittlung einer Kabelbruchstelle, insbesondere also bei der Bestimmung der Position der Kabelbruchstelle bei dem die Daten übertragenden Kabel, welches vom Umrichter zum Winkelsensor eines Antriebs geführt ist.

Weiter alternativ ist die Erfindung auch bei "big data" anwendbar. Beispielsweise werden die ermittelten Daten im Rahmen eines Condition-Monitorings über längere Zeiträume erfasst und statistisch ausgewertet. Damit wird es in Zukunft möglich sein, beispielsweise Störquellen in einer Anlage zu identifizieren, insbesondere mittels Bestimmung einer zeitlichen Korrelation, oder Probleme mit dem Leitungsmedium, Vibrationen beim Vorbeifahren eines Zuges oder dergleichen, zu detektieren oder diagnostizieren.

Die Erfindung wird nun anhand von schematischen Abbildungen näher erläutert:

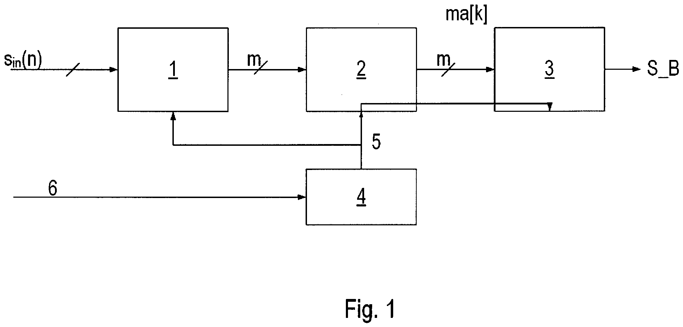

In der Figur 1 ist das erfindungsgemäße Verfahren zum Bewerten eines Datenübertragungskanals schematisch skizziert.

In der Figur 2 sind zwei Symbole des über den Datenübertragungskanal übertragenen Datenworts dargestellt und die Bestimmung des Ausgangssignals ma der Bewertungseinheit 1 verdeutlicht.

In der Figur 3 ist das Verfahren an einem ungestörten optimalen Empfangssignal 30 und an einem gestörten Empfangssignal 31 beispielhaft dargestellt.

Wie in den Figuren dargestellt, werden über den Datenübertragungskanal Telegramme übertragen, die aus Datenwörtern und somit auch aus Symbolen bestehen.

Jedes der Telegramme weist eine Präambel auf, die einen speziellen Signalverlauf aufweist, so dass eine empfängerseitig eine Synchronisation ausführbar ist.

Empfängerseitig wird hierzu auf diesen speziellen Signalverlauf gewartet und nach dessen Detektion ein Synchronisationssignal 6 erzeugt, welches einen Taktgeber 4 startet, der ein Taktsignal, hier auch als Fenstertakt 5 bezeichnet, startet.

Die Taktperiode des Taktsignals ist vorgegeben und gleicht der senderseitig vorgegebenen Taktperiode.

Das Ausgangssignal der Bewertungseinheit 1 wird einer Auswerteeinheit 2 zugeführt, deren Ausgangssignal einer Vergleichseinheit 3 zum Vergleichen mit Schwellwerten zugeführt wird.

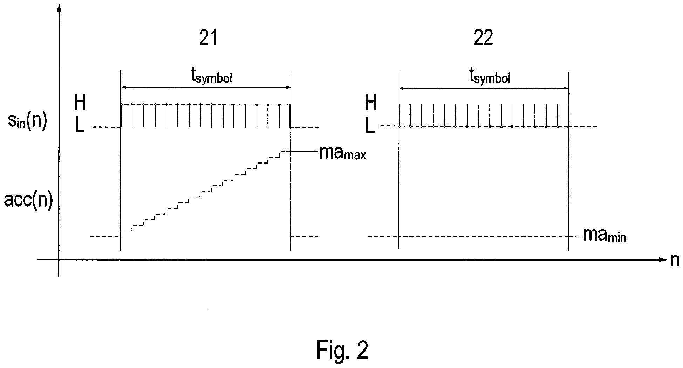

Die Bewertungseinheit 1 arbeitet in der in Figur 2 dargestellten Art und Weise.

Beispielshaft ist hier ein erstes Signal 21 und ein dazu invertiertes Signal 22 dargestellt.

In der Bewertungseinheit wird das Signal 21 beginnend nach Eintreffen einer Flanke des Taktsignals, also Fenstertakt 5, abgetastet. In der Figur 2 sind hierzu fünfzehn Abtastzeitpunkte ersichtlich. Bei jedem Abtastzeitpunkt wird das Akkumulatorsignal acc(n) beginnend mit dem Wert Null, inkrementiert, wenn das empfangene Signal 21 beim jeweiligen Abtasten den Wert Eins, also HIGH, aufweist. Ansonsten wird nicht inkrementiert.

Bei ungestörtem optimalem empfangenen Signal ergibt sich somit ein Maximalwert ma_max als letzter Wert, ansonsten ein geringerer Wert. Dieser letzte sich ergebende Wert wird als Ausgangssignal ma(n) der Bewertungseinheit 1 von der Bewertungseinheit 1 an die Auswerteeinheit 2 weiterleitet.

Die Abtastzeitpunkt sind vorzugsweise zeitlich regelmäßig voneinander beabstandet.

Bei dem beispielhaft in Figur 2 gezeigten, invertierten Signal 22 ergibt sich mit derselben Abtastung als Akkumulatorsignal acc(n) der konstante Wert Null, der somit als Minimalwert ma_min an die Auswerteeinheit 2 weitergeleitet wird.

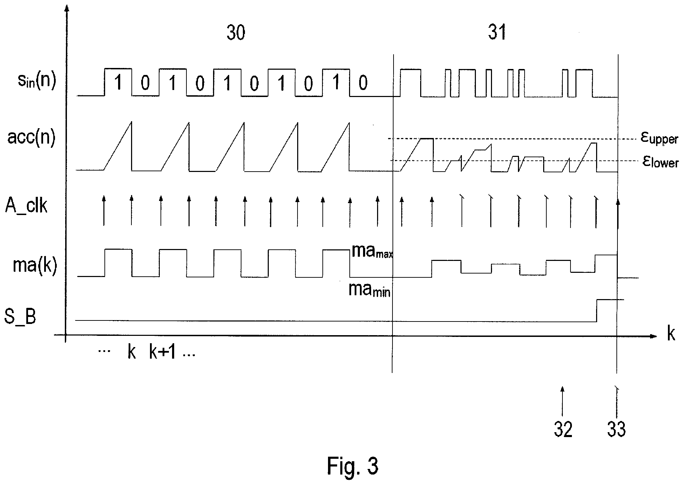

In Figur 3 ist für ein ungestörtes Signal 30, das hier als empfangenes Rechtecksignal, also abwechselnd 1 und 0 aufweisendes Signal, gewählt ist, das Akkumulatorsignal acc(n) dargestellt.

Die Flanken des Fenstertaktes 5 sind als Signal A_clk dargestellt. Weil keine Störungen auftreten und deshalb das Ausgangssignal ma(k) der Bewertungseinheit nur den Wert ma_max oder den Wert ma_min aufweist, insbesondere also keine Zwischenwerte, wird die Bewertung jeder Flanke des Taktsignals A_clk als sicher dargestellt.

Ausgangsseitig wird somit das Ausgangssignal S_B als fehlerfrei herausgegeben, in Figur 3 also als LOW.

In Figur 3 ist aber auch ein beispielhaft gestörtes empfangenes Signal 31 dargestellt. Hierbei erreicht das Akkumulatorsignal acc(n) nicht immer den Maximalwert, sondern Zwischenwerte.

Das Ausgangssignal der Auswerteeinheit 2 wird der Vergleichseinheit 3 zugeführt, wobei das Signal ma(k) auf Überschreiten eines unteren Schwellwertes E_lower und auf Unterschreiten eines oberen Schwellwertes E_upper überwacht wird.

Diese Schwellwerte sind in der Figur 3 zur Veranschaulichung beim Akkumulatorsignal acc(n) dargestellt, werden aber bevorzugt auf das Signal ma(k) angewendet.

Die Flanken des Fenstertaktes 5 sind wiederum als Signal A_clk dargestellt. Da aber nun Störungen auftreten, werden die entsprechenden Flanken als unsicher bewertet, was in Figur 3 graphisch durch die deformierte Pfeilspitze jeweils dargestellt ist.

Wenn eine vorgegebene Anzahl von aufeinander folgenden Flanken als unsicher bewertet wurde, wird das Ausgangssignal S_B als fehlerbehaftet herausgegeben, in Figur 3 also als HIGH. Dies bedeutet, dass der Datenübertragungskanal gestört ist.

Abhängig von diesen Ausgangssignal S_B wird die Datenübertragungsrate reduziert. Hierzu sendet der Empfänger zeitlich auf das Telegramm nachfolgend eine Information, so dass der Sender das Telegramm nochmals sendet.

Bei diesem nochmaligen Senden wird die Taktrate verkleinert, also auch die Fensterlänge vergrößert und der Fenstertakt 5 verkleinert.

Durch das nochmalige Senden mit zeitlich gedehntem Übertragen der Symbole steigt die Wahrscheinlichkeit für ein fehlerfreies Übertragen.

Das **Eingangssignal S_in(n) der Bewertungseinheit 1** ist **ein digitaler Datenstrom mit 1 bit Breite und das Ausgangssignal der Bewertungseinheit 1 ein digitaler Datenstrom mit m bit Breite, wobei m eine ganze Zahl ist, welche größer als 1 ist. Daher ist eine schnelle Auswertung ermöglicht.**

### Bezugszeichenliste

1 Bewertungseinheit
2 Auswerteeinheit
3 Vergleichseinheit
4 Taktgeber
5 Fenstertakt
6 Synchronisationssignal
21 erstes Symbol
22 zweites Symbol
30 optimales Empfangssignal
31 gestörtes Empfangssignal
32 sicheres Taktsignal
33 unsicheres Taktsignal
H High
L Low
k Symbolzählwert
n Symbolzählwert
S_B Ausgangssignal
S_in(n) Eingangssignal
Acc(n) Akkumulatorsignal
Ma(k) Ausgangssignal der Bewertungseinheit 1
Ma_max Maximalwert des Akkumulatorsignals
Ma_min Minimalwert des Akkumulatorsignals
E_upper oberer Schwellwert
E_lower unterer Schwellwert
A_clk Auswertungstakt

## Patentansprüche

1. Verfahren zur Datenübertragung über einen leitungsgebundenen Datenübertragungskanal, und Bewertung der Übertragungsqualität des Datenübertragungskanals,
wobei ein Sender einen digitalen Datenstrom sendet über den Datenübertragungskanal an einen Empfänger, wobei die Symbole (21, 22) des Datenstroms in einem ersten Takt gesendet werden,
wobei der von dem Empfänger empfangene digitale Datenstrom mit einem zweiten Takt analog überabgetastet wird,
wobei für jedes Symbol (21, 22) **von einer Bewertungseinheit (1)** die Summe der Abtastwerte bestimmt wird und für jedes Symbol (21, 22) **von einer Vergleichseinheit (3)** ein Ergebniswert bestimmt wird, der HIGH ist, wenn die Summe einen unteren Schwellwert (E_lower) überschreitet und einen oberen Schwellwert (E_upper) unterschreitet, und der ansonsten LOW ist,
**wobei das Eingangssignal S_in(n) der Bewertungseinheit (1) ein digitaler Datenstrom mit 1 bit Breite und das Ausgangssignal (S_B) der Bewertungseinheit (1) ein digitaler Datenstrom mit m bit** Breite ist,
**wobei m eine ganze Zahl ist, welche größer als 1 ist,**
wobei der zweite Takt schneller als der erste Takt ist,
wobei nach Überschreiten einer vorgegebenen Anzahl von zu zeitlich direkt nacheinander übertragenen Symbolen (21, 22) gehörenden Ergebniswerten, die HIGH sind, **das Ausgangssignal (S_B) einen Fehlerzustand anzeigt und/ ein gleitender Mittelwert der Ergebniswerte auf ein unzulässiges Maß an Abweichung von einem dritten Schwellwert überwacht wird,**
**wobei nach Auftreten des Fehlerzustands der Empfänger dem Sender eine Information übermittelt, so dass ein nochmaliges Senden des jeweiligen Telegramms mit zeitlich gedehntem Übertragen der Symbole (21, 22), also mit einem verlangsamten ersten Takt, ausgeführt wird.**

2. Verfahren nach Anspruch 1,
**dadurch gekennzeichnet, dass**
die Daten jeweils von einem Telegramm umfasst sind,
wobei das jeweilige gesendete Telegramm eine Präambel und zeitlich mit einem ersten Takt, darauf folgend Symbole (21, 22) aufweist,
wobei der Empfänger aus der empfangenen Präambel ein Synchronisationssignal (6) erzeugt,
welches einem Taktgeber (4) zugeführt wird, der den ersten Takt empfängerseitig erzeugt, synchron zum ersten Takt des Senders.

3. Verfahren zur Datenübertragung über einen leitungsgebundenen Datenübertragungskanal, und Bewertung der Übertragungsqualität des Datenübertragungskanals,
wobei von einem Sender an einen Empfänger ein Daten-Telegramm übertragen wird,
wobei das gesendete Telegramm eine Präambel und zeitlich mit einem Fenstertakt (5) darauf folgend Symbole (21, 22) aufweist,
wobei der Empfänger aus der empfangenen Präambel ein Synchronisationssignal (6) erzeugt, welches einem Taktgeber (4) zugeführt wird, der den Fenstertakt (5) empfängerseitig erzeugt,
wobei ein Akkumulatorsignal an einer jeweiligen Flanke des Fenstertakts (5) auf Null gesetzt wird
wobei das empfange Signal **von einer Bewertungseinheit (1) des Empfängers** während einer jeweiligen Fenstertaktperiodendauer mehrfach abgetastet wird,
wobei abhängig vom Abtastwert das Akkumulatorsignal inkrementiert wird oder nicht, wobei der am Ende des jeweiligen Fenstertakts (5) erreichte Wert des Akkumulatorsignals als Signal ma(k) herausgegeben wird und mit einem oberen und mit einem unteren Schwellwert (E_upper, E_lower) verglichen wird,
wobei bei Überschreiten des unteren Schwellwertes und bei Unterschreiten des oberen Schwellwertes die Übertragung des jeweiligen Symbols (21, 22) als nicht sicher bewertet wird,
wobei nach Überschreiten einer vorgegebenen Anzahl von empfangenen und als nicht sicher bewerteten Symbolen (21, 22) ein Ausgangssignal (S_B) einen Fehlerzustand anzeigt,
**wobei das Eingangssignal S_in(n) der Bewertungseinheit (1) ein digitaler Datenstrom mit 1 bit Breite und das Ausgangssignal (S_B) der Bewertungseinheit (1) ein digitaler Datenstrom mit m bit** Breite ist, **wobei m eine ganze Zahl ist, welche größer als 1 ist,**
**wobei k eine natürliche Zahl ist, die die Symbole (21, 22) nummeriert,**
**wobei nach Auftreten des Fehlerzustands der Empfänger dem Sender eine Information übermittelt, so dass ein nochmaliges Senden des Telegramms mit zeitlich gedehntem Übertragen der Symbole (21, 22) ausgeführt wird.**

4. Verfahren nach einem der vorangegangenen Ansprüche,
**dadurch gekennzeichnet, dass**
der Abtastwert mit einem Schwellwert verglichen wird und bei Überschreiten für diesen Abtastwert HIGH und bei Unterschreiten LOW verwendet wird.

5. Verfahren nach einem der vorangegangenen Ansprüche,
**dadurch gekennzeichnet, dass**
die vorgegebene Anzahl einen Wert zwischen fünf und dreißig aufweist.

6. Verfahren nach einem der vorangegangenen Ansprüche,
**dadurch gekennzeichnet, dass**
der Fehlerzustand auch optisch und/oder akustisch angezeigt und/oder an einen verbundenen Rechner übermittelt wird.

7. Antriebssystem zur Durchführung eines Verfahrens nach einem der vorangegangenen Ansprüche,
wobei das Antriebssystem einen von einem Umrichter gespeisten Elektromotor aufweist,
wobei ein Winkelsensor des Antriebssystems die Drehwinkellage eines Rotors des Elektromotors erfasst,
**wobei** der Winkelsensor als Sender fungiert und der Umrichter als Empfänger,
**wobei der Sender und der Empfänger geeignet ausgeführt sind, den Datenübertragungskanal bidirektional zu betreiben,**
**dadurch gekennzeichnet, dass**
der Sender und der Empfänger derart geeignet eingerichtet sind, dass der Sender einen digitalen Datenstrom sendet über den Datenübertragungskanal an den Empfänger, wobei die Symbole (21, 22) des Datenstroms in einem ersten Takt gesendet werden,
wobei das Antriebssystem derart eingerichtet ist, dass der von dem Empfänger empfangene digitale Datenstrom mit einem zweiten Takt **analog** überabgetastet **wird,**
wobei das Antriebssystem derart eingerichtet ist, dass für jedes Symbol (21, 22) von einer Bewertungseinheit (1) des Antriebssystems die Summe der Abtastwerte bestimmt wird und für jedes Symbol (21, 22) von einer Vergleichseinheit (3) des **Antriebssystems ein Ergebniswert bestimmt, der HIGH ist, wenn die Summe einen unteren Schwellwert (E_lower) überschreitet und einen oberen Schwellwert (E_upper) unterschreitet, und der ansonsten LOW ist,**
**wobei das Eingangssignal S_in(n) der Bewertungseinheit (1) ein digitaler Datenstrom mit 1 bit Breite und das Ausgangssignal (S_B) der Bewertungseinheit (1) ein digitaler Datenstrom mit m bit** Breite ist, **wobei m eine ganze Zahl ist, welche größer als 1 ist, wobei der zweite Takt schneller als der erste Takt ist,**
**wobei das Antriebssystem derart eingerichtet ist, dass nach Überschreiten einer vorgegebenen Anzahl von zu zeitlich direkt nacheinander übertragenen Symbolen (21, 22) gehörenden Ergebniswerten, die HIGH sind, das Ausgangssignal (S_B) einen Fehlerzustand anzeigt und/ein gleitender Mittelwert der Ergebniswerte auf ein unzulässiges Maß an Abweichung von einem dritten Schwellwert überwacht wird,**
**wobei das Antriebssystem derart eingerichtet ist, dass nach Auftreten des Fehlerzustands der Empfänger dem Sender eine Information übermittelt, so dass ein nochmaliges Senden des jeweiligen Telegramms mit zeitlich gedehntem Übertragen der Symbole (21, 22), also mit einem verlangsamten ersten Takt, ausgeführt wird.**

## Claims

1. Method for transmitting data via a wired data transmission channel and for assessing the transmission quality of the data transmission channel,
wherein a transmitter sends a digital data stream to a receiver via the data transmission channel, wherein the symbols (21, 22) of the data stream are sent in a first clock,
wherein the digital data stream received by the receiver is oversampled in an analog manner with a second clock,
wherein for each symbol (21, 22) the sum of the sampled values is determined by an assessment unit (1), and for each symbol (21, 22) a result value is determined by a comparison unit (3), the result value being HIGH if the sum exceeds a lower threshold (E_lower) and does not reach an upper threshold (E_upper), and otherwise being LOW,
wherein the input signal S_in(n) of the assessment unit (1) is a digital data stream having a width of 1 bit, and the output signal (S_B) of the assessment unit (1) is a digital data stream having a width of m bits, m being an integer greater than 1,
wherein the second clock is faster than the first clock,
wherein, once a specified number of HIGH result values belonging to symbols (21, 22) transmitted one directly after another over time has been exceeded, the output signal (S_B) indicates an error state and a moving average of the result values is monitored for an impermissible degree of deviation from a third threshold,
wherein, once the error state has occurred, the receiver sends information to the transmitter so that the respective telegram is sent again, with the symbols (21, 22) being transmitted over an extended length of time, that is to say with a slower first clock.

2. Method according to claim 1,
**characterized in that**
each item of data is included in a telegram,
wherein the respective sent telegram comprises a preamble and symbols (21, 22) temporally following thereafter with a first clock,
wherein the receiver generates a synchronization signal (6) on the basis of the received preamble,
said synchronization signal being fed to a clock generator (4) which generates the first clock on the receiver side in a manner synchronous with the first clock of the transmitter.

3. Method for transmitting data via a wired data transmission channel and for assessing the transmission quality of the data transmission channel,
wherein a data telegram is sent from a transmitter to a receiver, wherein the sent telegram comprises a preamble and symbols (21, 22) temporally following thereafter with a window clock (5),
wherein the receiver generates a synchronization signal (6) on the basis of the received preamble,
said synchronization signal being fed to a clock generator (4) which generates the window clock (5) on the receiver side,
wherein an accumulator signal is set to zero at a respective edge of the window clock (5),
wherein the received signal is sampled multiple times by an assessment unit (1) of the receiver during a respective window clock period duration,
wherein, depending on the sampled value, the accumulator signal is or is not incremented,
wherein the value of the accumulator signal reached at the end of the respective window clock (5) is output as a signal ma(k) and is compared with an upper and a lower threshold (E_upper, E_lower),
wherein, if the value exceeds the lower threshold and does not reach the upper threshold, the transmission of the respective symbol (21, 22) is assessed as unsecure,
wherein, once a specified number of symbols (21, 22) has been received and assessed as unsecure, an output signal (S_B) indicates an error state,
wherein the input signal S_in(n) of the assessment unit (1) is a digital data stream having a width of 1 bit, and the output signal (S_B) of the assessment unit (1) is a digital data stream having a width of m bits, m being an integer greater than 1,
wherein k is a natural number numbering the symbols (21, 22),
wherein, once the error state has occurred, the receiver sends information to the transmitter so that the telegram is sent again, with the symbols (21, 22) being transmitted over an extended length of time.

4. Method according to any one of the preceding claims,
**characterized in that**
the sampled value is compared with a threshold, and HIGH is used if the sampled value exceeds the threshold and LOW is used if it does not reach the threshold.

5. Method according to any one of the preceding claims,
**characterized in that**
the specified number has a value between five and thirty.

6. Method according to any one of the preceding claims,
**characterized in that**
the error state is also indicated optically and/or acoustically and/or is sent to a connected computer.

7. Drive system for carrying out a method according to any one of the preceding claims,
wherein the drive system comprises a converter-fed electric motor,
wherein an angle sensor of the drive system senses the rotation angle position of a rotor of the electric motor,
wherein the angle sensor acts as a transmitter and the converter acts as a receiver,
wherein the transmitter and the receiver are suitably designed to operate the data transmission channel bidirectionally,
**characterized in that**
the transmitter and the receiver are suitably designed such that the transmitter sends a digital data stream to the receiver via the data transmission channel, wherein the symbols (21, 22) of the data stream are sent in a first clock,
wherein the drive system is designed such that the digital data stream received by the receiver is oversampled in an analog manner with a second clock,
wherein the drive system is designed such that for each symbol (21, 22) the sum of the sampled values is determined by an assessment unit (1) of the drive system, and for each symbol (21, 22) a result value is determined by a comparison unit (3) of the drive system, the result value being HIGH if the sum exceeds a lower threshold (E_lower) and does not reach an upper threshold (E_upper), and otherwise being LOW,
wherein the input signal S_in(n) of the assessment unit (1) is a digital data stream having a width of 1 bit, and the output signal (S_B) of the assessment unit (1) is a digital data stream having a width of m bits, m being an integer greater than 1,
wherein the second clock is faster than the first clock,
wherein the drive system is designed such that, once a specified number of HIGH result values belonging to symbols (21, 22) transmitted one directly after another over time has been exceeded, the output signal (S_B) indicates an error state and a moving average of the result values is monitored for an impermissible degree of deviation from a third threshold,
wherein the drive system is designed such that, once the error state has occurred, the receiver sends information to the transmitter so that the respective telegram is sent again, with the symbols (21, 22) being transmitted over an extended length of time, that is to say with a slower first clock.

## Revendications

1. Procédé de transmission de données par l'intermédiaire d'un canal transmetteur de données à raccordement câblé, et d'évaluation qualitative de la transmission opérée par ledit canal transmetteur de données,
sachant qu'un émetteur adresse un flux de données numériques à un récepteur par l'entremise dudit canal transmetteur de données, les symboles (21, 22) dudit flux de données étant envoyés en une première cadence d'horloge,
ledit flux de données numériques, reçu par ledit récepteur, étant soumis à suréchantillonnage analogique avec une seconde cadence d'horloge,
sachant que la somme des valeurs d'échantillonnage est déterminée pour chaque symbole (21, 22) par une unité d'évaluation (1) et qu'il est procédé pour chaque symbole (21, 22), par une unité de comparaison (3), à la détermination d'une valeur de résultat
qui est ÉLEVÉE lorsque ladite somme excède une valeur de seuil (E *lower)* inférieure et dépasse négativement une valeur de seuil (E_*upper)* supérieure et qui, sinon, est FAIBLE,
le signal d'entrée S_in(n) de l'unité d'évaluation (1) étant un flux de données numériques d'une largeur de 1 bit et le signal de sortie (S_B) de ladite unité d'évaluation (1) étant un flux de données numériques d'une largeur de m bits,
m étant un nombre entier supérieur à 1,
étant précisé
que la seconde cadence d'horloge est plus rapide que la première cadence d'horloge,
et qu'après le dépassement positif d'un nombre préétabli de valeurs de résultat ÉLEVÉES relevant de symboles (21, 22) transmis en succession directe dans le temps, ledit signal de sortie (S_B) indique un état défectueux et une moyenne glissante desdites valeurs de résultat est surveillée pour établir un degré d'écart inadmissible par rapport à une troisième valeur de seuil, sachant qu'après l'apparition de l'état défectueux, le récepteur transmet une information à l'émetteur de façon telle qu'un envoi réitéré du télégramme respectif soit effectué avec transmission des symboles (21, 22) étirée dans le temps, c'est-à-dire avec une première cadence d'horloge ralentie.

2. Procédé selon la revendication 1,
**caractérisé par le fait que**
les données sont respectivement englobées par un télégramme,
le télégramme envoyé considéré incluant un préambule et des symboles (21, 22) qui lui succèdent dans le temps avec une première cadence d'horloge,
le récepteur engendrant, sur la base du télégramme reçu, un signal de synchronisation (6)
appliqué à un générateur d'impulsions (4) qui engendre ladite première cadence d'horloge, côté récepteur, en synchronisme avec la première cadence d'horloge de l'émetteur.

3. Procédé de transmission de données par l'intermédiaire d'un canal transmetteur de données à raccordement câblé, et d'évaluation qualitative de la transmission opérée par ledit canal transmetteur de données,
un télégramme de données étant transmis à un récepteur par un émetteur,
le télégramme envoyé incluant un préambule et des symboles (21, 22) qui lui succèdent dans le temps avec une cadence d'horloge de fenêtre (5),
ledit récepteur engendrant, sur la base du préambule reçu, un signal de synchronisation (6) appliqué à un générateur d'impulsions (4) qui engendre ladite cadence d'horloge de fenêtre (5), côté récepteur,
sachant qu'un signal d'accumulateur est mis à zéro au niveau d'un flanc respectif de ladite cadence d'horloge de fenêtre (5),
le signal reçu étant répétitivement échantillonné, par une unité d'évaluation (1) dudit récepteur, au cours de la durée considérée d'une période de cadence d'horloge de fenêtre,
sachant qu'il est procédé, ou non, à une incrémentation dudit signal d'accumulateur en fonction de la valeur d'échantillonnage,
la valeur dudit signal d'accumulateur, atteinte à l'achèvement de la cadence d'horloge de fenêtre (5) respective, étant délivrée en tant que signal ma(k) et comparée à des valeurs de seuil (E_*upper,* E_*lower*) supérieure et inférieure,
étant précisé que, lors d'un dépassement positif de ladite valeur de seuil inférieure et lors d'un dépassement négatif de ladite valeur de seuil supérieure, la transmission du symbole (21, 22) considéré est évaluée comme non sûre,
sachant qu'après le dépassement positif d'un nombre préétabli de symboles (21, 22) reçus et évalués comme non sûrs, un signal de sortie (S_B) indique un état défectueux,
le signal d'entrée S_in(n) de l'unité d'évaluation (1) étant un flux de données numériques d'une largeur de 1 bit et ledit signal de sortie (S_B) de ladite unité d'évaluation (1) étant un flux de données numériques d'une largeur de m bits,
m étant un nombre entier supérieur à 1,
k étant un nombre naturel qui numérote les symboles (21, 22),
sachant qu'après l'apparition de l'état défectueux, le récepteur transmet une information à l'émetteur de façon telle qu'un envoi réitéré du télégramme soit effectué avec transmission desdits symboles (21, 22) étirée dans le temps.

4. Procédé selon l'une des revendications précédentes,
**caractérisé par le fait que**
la valeur d'échantillonnage est comparée à une valeur de seuil, ÉLEVÉE et FAIBLE étant utilisés, pour cette valeur d'échantillonnage, respectivement en cas de dépassement positif et en cas de dépassement négatif.

5. Procédé selon l'une des revendications précédentes,
**caractérisé par le fait que**
le nombre préétabli présente une valeur comprise entre cinq et trente.

6. Procédé selon l'une des revendications précédentes,
**caractérisé par le fait que**
l'état défectueux est également affiché en mode optique et/ou acoustique, et/ou transmis à un ordinateur connecté.

7. Système d'entraînement dévolu à la mise en œuvre d'un procédé conforme à l'une des revendications précédentes,
ledit système d'entraînement étant équipé d'un moteur électrique alimenté par un convertisseur, un capteur angulaire dudit système d'entraînement détectant la position angulaire d'un rotor dudit moteur électrique,
ledit capteur angulaire et ledit convertisseur remplissant, respectivement, la fonction d'un émetteur et celle d'un récepteur,
ledit émetteur et ledit récepteur étant conçus avec aptitude à faire fonctionner le canal transmetteur de données en mode bidirectionnel,
**caractérisé par le fait que**
l'émetteur et le récepteur sont adéquatement agencés de telle sorte que ledit émetteur adresse un flux de données numériques audit récepteur par l'intermédiaire du canal transmetteur de données, les symboles (21, 22) dudit flux de données étant envoyés en une première cadence d'horloge,
le système d'entraînement étant agencé de façon telle que ledit flux de données numériques, reçu par le récepteur, soit soumis à suréchantillonnage analogique avec une seconde cadence d'horloge,
ledit système d'entraînement étant agencé de telle manière que la somme des valeurs d'échantillonnage soit déterminée pour chaque symbole (21, 22) par une unité d'évaluation (1) du système d'entraînement et qu'il soit procédé pour chaque symbole (21, 22), par une unité de comparaison (3) dudit système d'entraînement, à la détermination d'une valeur de résultat qui est ÉLEVÉE lorsque ladite somme excède une valeur de seuil (E_*lower*) inférieure et dépasse négativement une valeur de seuil (E_*upper*) supérieure et qui, sinon, est FAIBLE,
le signal d'entrée S_in(n) de l'unité d'évaluation (1) étant un flux de données numériques d'une largeur de 1 bit et le signal de sortie (S_B) de ladite unité d'évaluation (1) étant un flux de données numériques d'une largeur de m bits,
m étant un nombre entier supérieur à 1,
sachant que la seconde cadence d'horloge est plus rapide que la première cadence d'horloge,
le système d'entraînement étant agencé pour faire en sorte qu'après le dépassement positif d'un nombre préétabli de valeurs de résultat ÉLEVÉES relevant de symboles (21, 22) transmis en succession directe dans le temps, ledit signal de sortie (S_B) indique un état défectueux, et qu'une moyenne glissante desdites valeurs de résultat soit surveillée pour établir un degré d'écart inadmissible par rapport à une troisième valeur de seuil,
ledit système d'entraînement étant agencé de manière telle qu'après l'apparition de l'état défectueux, le récepteur transmette une information à l'émetteur afin qu'un envoi réitéré du télégramme respectif soit effectué avec transmission desdits symboles (21, 22) étirée dans le temps, c'est-à-dire avec une première cadence d'horloge ralentie.
